(19) Europäisches Patentamt
European Patent Office
Office européen des brevets

(11) **EP 3 316 220 B1**

(12) **EUROPEAN PATENT SPECIFICATION**

(45) Date of publication and mention
of the grant of the patent:
**05.01.2022 Bulletin 2022/01**

(51) Int Cl.:
***G06T 7/62*** *(2017.01)*   ***G01S 15/96*** *(2006.01)*

(21) Application number: **17197860.4**

(22) Date of filing: **23.10.2017**

(54) **METHOD FOR DETERMINING TUNA BIOMASS IN A WATER ZONE AND CORRESPONDING SYSTEM**

VERFAHREN ZUR BESTIMMUNG DER BIOMASSE VON THUNFISCH IN EINER WASSERZONE UND ENTSPRECHENDES SYSTEM

PROCÉDÉ DE DÉTERMINATION DE BIOMASSE DE THON DANS UNE ZONE D'EAU ET SYSTÈME CORRESPONDANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Validation States:
**MA**

(30) Priority: **26.10.2016 ES 201631379**

(43) Date of publication of application:
**02.05.2018 Bulletin 2018/18**

(73) Proprietors:
• **Balfegó & Balfegó S.L.**
  **43860 Tarragona (ES)**
• **Universitat Politècnica de València**
  **46022 Valencia (ES)**
• **Instituto Español de Oceanografia (IEO)**
  **28002 Madrid (ES)**

(72) Inventors:
• **Andreu García, Gabriela**
  **46022 Valencia (ES)**
• **Atienza Vanacloig, Vicente**
  **46022 Valencia (ES)**
• **Espinosa Roselló, Víctor**
  **46022 Valencia (ES)**
• **Estruch Fuster, Vicente Domingo**
  **46022 Valencia (ES)**
• **Muñoz Benavent, Pau**
  **46022 Valencia (ES)**
• **Ordóñez Cebrián, Patricia**
  **46022 Valencia (ES)**
• **Pérez Arjona, Isabel**
  **46022 Valencia (ES)**
• **Puig Pons, Vicente**
  **46022 Valencia (ES)**
• **Soliveres González, Ester**
  **46022 Valencia (ES)**
• **Valiente González, José Miguel**
  **46022 Valencia (ES)**
• **Santaella Álvarez, Eladio**
  **28002 Madrid (ES)**
• **De la Gándara García, Fernando**
  **28002 Madrid (ES)**

(74) Representative: **Curell Suñol S.L.P.**
**Muntaner 240, 4o 2a**
**08021 Barcelona (ES)**

(56) References cited:
**US-A1- 2011 292 201**

• **V Puig ET AL: "Biomass estimation of bluefin tuna in sea cages by the combined use of acoustic and optical techniques", Vol. Sci. Pap. ICCAT, 1 January 2012 (2012-01-01), pages 284-290, XP055438276, Retrieved from the Internet: URL:http://www.iccat.int/Documents/CVSP/CV 068_2012/no_1/CV068010284.pdf**

- Puig Pons ET AL: "Monitorización y medida de atunes en jaulas mediante el uso combinado de técnicas acústicas y ópticas", Tesina Master en Ingeniería Acústica, 1 January 2010 (2010-01-01), XP055432514, UNIVERSIDAD POLITECNICA DE VALENCIA Retrieved from the Internet: URL:https://riunet.upv.es/bitstream/handle /10251/10336/TESINA FINAL VICENT.pdf [retrieved on 2017-12-06]
- Angelia S M Vanderlaan ET AL: "DIRECT ASSESSMENT OF JUVENILE ATLANTIC BLUEFIN TUNA: INTEGRATING SONAR AND AERIAL RESULTS IN SUPPORT OF FISHERY-INDEPENDENT SURVEYS", Vol. Sci. Pap. ICCAT, 1 January 2014 (2014-01-01), pages 1617-1625, XP055438283, Retrieved from the Internet: URL:https://www.iccat.int/Documents/CVSP/C V071_2015/n_4/CV071041617.pdf
- GARCIA M ET AL: "Monitoring and control sensor system for fish feeding in marine fish farms", 12 August 2011 (2011-08-12), IET COMMUNICAT, THE INSTITUTION OF ENGINEERING AND TECHNOLOGY, GB, PAGE(S) 1682 - 1690, XP006042604, ISSN: 1751-8628 * abstract * * paragraphs [04.5], [4.6.1] *
- David G Reid: "Report on Echo Trace Classification", ICES COOPERATIVE RESEARCH REPORT, 1 March 2000 (2000-03-01), pages 1-107, XP055741418, Retrieved from the Internet: URL:http://prep.ices.dk/sites/pub/Publicat ion%20Reports/Cooperative%20Research%20R ep ort%20(CRR)/CRR238.pdf [retrieved on 2020-10-19]

## Description

<u>Field of the Invention</u>

The invention is comprised in the field of sustainable fish farming activities.

More specifically, the invention relates to a method for determining the biomass of tuna in a region of water according to claim 1.

The invention also relates to the corresponding system. In the context of this invention, the concept of biomass also extends to measurements such as the number of individuals and their size.

<u>State of the Art</u>

The authorities and especially fishermen and producers have made an enormous effort in recent years to boost the recovery of the stock of red tuna. This has involved taking measures in terms of the adapting the fishing season, minimum size and fishing quotas. One of the existing systems is based on catching live adult specimens once they have spawned, and their subsequent fattening in sea cages with controlled feeding, such that the specimens can be sacrificed according to market demand, thereby evening out the number of catches and reducing the impact thereof on critical phases of tuna growth. The tuna are thereby located and captured by surrounding them with purse seines so they can then be transferred to transport cages and from there to fattening farms. For the sake of conservation, the governments of each region, for example in the ICCAT (International Commission for the Conservation of the Atlantic Tuna) regulate the maximum number of specimens and biomass that can be captured, so the counting and estimation of the size that allows the control of said quotas are required.

Current commercial systems are based on a specimen number and size counting based on image analysis, whether automatically, with human assistance by delimiting the size of the outline of the tuna, or even altogether manually. A well-known example is the VICASS®. system. The weight is calculated from the size using an algorithm established based on the fishing regulations of each geographical region.

However, systems of this type have a series of drawbacks, such as the time required for obtaining the results, the precision thereof, and the variability in the results that depends heavily on the people assisting the system and on how optimistic or pessimistic they are when manually delimiting the size of the outline of the specimens.

Some known documents related to the state of the art are disclosed hereinafter.

V. Puig ET AL: "Biomass estimation of bluefin tuna in sea cages by the combined use of acoustic and optical techniques", Vol. Sci. Pap. ICCAT, 2012-01-01, refers to an experimental setup to estimate the biomass of caged bluefin tuna (Thunnus thynnus) in the Spanish Mediterranean coast. Aims are to monitor individual tuna during all stages of growth, to control the transfer of fish caught in purse seines to towing cages and to be able to estimate the total number of specimens and the biomass transferred. To do this, the document proposes a combined system of acoustic and optical techniques (both non-intrusive), in order to obtain direct values of acoustical target strength (TS) and information on the orientation of tuna inside the acoustic beam and their size. To achieve complete information, ventral and dorsal acoustic measurements are done using in a first attempt a multiplexed scientific echo-sounder with two 200 KHz split-beam transducers, while a stereoscopic video system provides optical information and allows estimating the size and the weight of the specimens. Preliminary results indicate that this combined use of techniques provides precise information to determine the TS as a function of fish orientation and for proper monitoring of tuna in floating cages.

Puig Pons ET AL: "Monitorización y medida de atunes en jaulas mediante el uso combinado de tecnicas acústicas y ópticas", Tesina Master en Ingenieria Acústica, 2010-01-01, presents an experimental setup designed to monitor the growth of bluefin tuna (Thunnus thynnus) in cages. The study was carried in cages that IEO has in Cartagena's coast (Murcia, Spain). This study is integrated in the European program SELFDOTT (From capture based to self-sustained aquaculture domestication of bluefin tuna Thunnus thynnus). The main objective is to know the status of the individuals housed in breeding cages, through a combination of optical and acoustic techniques both non-intrusive). This is done using a scientific echo sounder, equipped with a multiplexer and two 200 KHz split-beam transducers to get dorsal and ventral measurements of fishes. On the other hand, the authors used a stereoscopic video system, placed inside the cage, which provides visual information on the behavior of the tuna and allows them to estimate the length of some of them while crossing the acoustic beam. According to the authors, the measurements obtained will enable them to establish a relationship between the TS and the tuna size.

US 2011/292201 A1 (WESTPHAL WAYLON [US] ET AL) 2011-12-01 discloses an underwater scouting camera comprising: an outer cover, a door, a memory storage, a battery, and an internal housing which includes a flash, a shutter, a display frame, and a sonar sensor. When the sonar sensor emits a pulse in order to detect any fish, upon detection the flash and the shutter trigger to take a digital picture that may be saved on a memory device. After the picture is taken, the date and time appear on the display frame, and a notification is transmitted to a personal handheld device. The scouting camera allows a user to remotely track fish without having to continuously monitor the underwater scouting camera.

Description of the Invention

The objective of the invention is to provide a method for determining the biomass of tuna in a region of water of the type indicated above that allows solving the aforementioned problems. Another objective of the invention is to provide a corresponding system.

This objective is achieved by means of a method for determining the biomass of tuna in a region of water of the type indicated above, with the features of claim 1.

In the context of the invention, said region of water is the region of measurement through which tuna pass; it can have different shapes depending on the characteristics of the application and the measurement means. Therefore, given that the measurement means are focused in an upward direction, although not necessarily completely vertical, given the normal swimming shape of tuna, ventral measurements are obtained in which the background of the images is the lightest part due to sunlight and the tuna are shadows, which increases the contrast and makes detection and measurement easier. Furthermore, it has also been experimentally found that this perspective of the tuna body is fairly stable despite its movements and turns while swimming. It has also been experimentally found that taking ventral acoustic measurements makes specimen identification easier for two reasons: the first reason is that the maximum echo of the swim bladder is achieved, and the sound must pass through fewer complex structures from the ventral region to said bladder, arriving there more uniformly. In contrast, dorsal measurements tend to cause a series of echoes of more complex structures, such as the skeleton of the fish, the cranium, etc., together with internal rebounds that can hinder obtaining a suitable model for identification. The second reason is that in order to identify individuals, the sounder should be placed at a distance that is sufficient for preventing near field effects, such that an echo with the most spherically shaped wavefront possible is received. Therefore depending on the application, the fish are very close to the surface, whereby making it impossible to prevent the near field with dorsal acoustic measurements. Another added benefit of ventral measurements is that in this case, the waves rebound in the region with the highest fat accumulation, which also allows estimating the so-called condition factor of tuna, i.e., the amount of fat they have. In the context of this document, an echogram refers to a representation of the acoustic echo measurements over time, not just for an instant.

The combination of acoustic and optical measurements has the effect of obtaining the best of both, therefore the acoustic measurements allow quickly identifying the number of specimens, even under conditions of turbidity, whereas the optical measurements, with the maximum contrast available, allow seeing the sizes of the tuna and thereby inferring their weight. The combination of both types of measurements can even be dependent, such that specimen correlations between the echogram and the sequence of images are identified.

Determining said tuna weight value comprises:

-   selecting tuna from said sequence of images;
-   determining a calculation for the size value for each of said selected tuna;
-   determining a calculation for the individual weight value for each of said selected tuna from said size value; and
-   determining said tuna weight value as the mean value of said individual weight value for each of said selected tuna; wherein said biomass value is determined as the multiplication of said value of the number of tuna by said tuna weight value.

Said sequence of images comprises a plurality of frames and wherein selecting tuna from said sequence of images comprises the following steps:

-   segmenting said frames to obtain first candidate objects;
-   filtering said first candidate objects by their geometric characteristics, obtaining second objects which are a subset of said first objects, wherein said second objects are selected as tuna.

Preferred embodiments the features of which are described in the dependent claims have been provided based on the invention defined in the main claim.

For the sake of simplicity, in the context of this document and, unless otherwise indicated, size refers to the dimensions, as a whole or as a combination thereof. Local regulations normally indicate the parameters of conversion between size and estimated weight, so this is an approximate calculation that is nonetheless accepted in the art. Therefore, the tuna are selected from the sequence of images and the size for said tuna is measured, obtaining a weight. Depending on the formula for the final calculation of the biomass, all the tuna or just those considered the most representative can be measured, even avoiding those the outlines of which are unclear, overlapping one another, etc.

Preferably, said image capture means comprise two optical sensors located in a relative position with respect to one another, such that said sequence of images comprises a stereoscopic sequence comprising a first sub-sequence of images and a second sub-sequence of images, both sub-sequences being synchronized; wherein said method comprises the additional steps of:

- selecting tuna that are present simultaneously in said first sub-sequence of images and in said second sub-sequence of images;
- determining a calculation for the distance value for said selected tuna, using the values of said relative position between said first optical sensor and said second optical sensor; and
- modifying said size value for each of the selected tuna using said distance value.

A sequence of stereoscopic images is thereby obtained, and from said stereoscopic images the relative position between the optical sensors, for example video cameras, is known. There are two images from different angles in each frame, which also allows inferring the distance at which the fish is located. That is particularly advantageous given that the tuna can travel over multiple levels and using a mean distance can have a negative impact on the quality of the measurement. By using two cameras, the distance measurement improves and the optical image can even be correlated with the echogram. For the sake of simplicity, the calibration methods for stereoscopic imaging systems are not described in detail herein given that they are well known in the art and should be carried out prior to the measurements.

Preferably, selecting tuna that are present simultaneously in said first sub-sequence of images and in said second sub-sequence of images comprises selecting two characteristic points of each selected tuna in one of said first sub-sequence and said second sub-sequence, said two characteristic points preferably being the tip of the head and the tip of the tail, and projecting said two points into the other one of said first sub-sequence and said second sub-sequence, by means of epipolar lines; such that those tuna with said two characteristic points in one of said first sub-sequence and said second sub-sequence that correspond with two other characteristic points located on said epipolar lines in the other one of said first sub-sequence and said second sub-sequence are selected.

The use of epipolar geometry for extracting three-dimensional position information from stereoscopic images is known. Therefore those tuna appearing in the two sub-sequences and the points of which are aligned according to said epipolar lines, which is a condition required for it to be considered one and the same object, are selected. In this preferred embodiment, the two points are chosen taking into account the swimming direction and the usage position of the image capture means, such that by using the points of the head and tail, the maximum distance for the fish is used, which enhances precision.

Preferably, determining a calculation for the distance value and modifying said size value for said selected tuna comprises the steps of:

- correcting lens distortion effects in said sequence of images;
- obtaining the distance value by triangulating each pair of points of said sequence of images, in which said pair of points comprises a point in one of said first sub-sequence and said second sub-sequence, and a corresponding point in the other one of said first sub-sequence and said second sub-sequence; and
- modifying said size value for each selected tuna based on said distance value of said pairs of points corresponding to said selected tuna.

The correction of optical defects of the lenses therefore allows using wide-angle or even so-called fisheye lenses, which typically have strong distortion, particularly at their ends and usually in the form of a barrel distortion. Using live images would entail inaccuracies in size determination. On the other hand, a corrected shape of the tuna is obtained depending on the distance, which has an effect on size determination precision.

Said candidate objects are thereby segmented by methods known in the art, for example, by means of using so-called blobs. Given the features of the images, the light intensity value may not be constant, which could entail difficulties for determining the outline of the tuna; for this reason the use of local contrast is a preferred solution, given that the background is lighter than the fish in any case. This strategy allows for an effective cropping. Then those objects which depart too much from what might be a tuna due to their geometric characteristics such as dimensions or shape are eliminated. For example, echoes relating to the structures of seines, ships, etc.

Preferably, selecting tuna from said sequence of images comprises the additional step of:

- fitting a tuna image model to said second objects, such that if the fitting error for one object exceeds an error threshold value, said object is discarded, whereas otherwise said object is considered to be a selected tuna and a fitted model is obtained;

and wherein determining a calculation for the size value for each of said selected tuna comprises obtaining said size value from said fitted model of said selected tuna.

The method is therefore based on a model that represents the shape of a tuna and the attempts to fit that model to the selected candidate objects. If the object does not fit the tuna model, it is discarded; in other words, a fitting error is calculated depending on the type of model, and if that error exceeds a threshold, the object is discarded. Said threshold will therefore be dependent on the model itself, and the skilled person would have to obtain an experimental threshold value that yields the best results. As a non-limiting example, if the model is an outline of points, the error can be the quadratic sum of the distances from those points to the outline of the candidate object. For objects that meet the criterion of the tuna model, the model fits the particular shape and that fitted model is used to obtain the size; as a non-limiting example, a tuna model that contemplates torsion can allow measuring the size of the tuna based on the torsion curve.

Preferably, said tuna image model comprises a model in segments wherein points, called vertebrae, $v_i$, located along the axis of the tuna are used. Preferably 20 points, numbered from vertebra 0 ($v_0$), which corresponds to the tip of the head, to vertebra 19 ($v_{19}$), which corresponds to the end of the tail. In other words, each point or vertebra, $v_i$, of the model is located on the spine of the model and can have a uniform distribution or it can be variable, for example, to better outline features such as fins or the peduncle of the fish.

Preferably, an estimation of the contour of the tuna is performed by relating each of said vertebrae, $v_i$, with an estimated point of the contour, $k_i$, preferably by means of coefficients relating the position of each of said vertebrae $v_i$ with the distance to the vertebra $v_i$ of each of said estimated points of the contour $k_i$, preferably the following coefficients:

$$c^u = [0, \quad 0.7, \quad 1.15, \quad 1.35, \quad 1.55, \quad 1.65, \quad 2.0, \quad 2.5, \quad 2.8, \quad 3.15,$$
$$1.7, \quad 1.55, \quad 1.35, \quad 1.1, \quad 0.9, \quad 0.7, \quad 0.55, \quad 0.45,$$
$$0.5, \quad 0.75]$$

where the values are ordered consecutively from $v_0$ to $v_{19}$.

Therefore, a model is used in which the lengths of the fish also serve to determine the width. The values of the coefficients have been obtained experimentally and correspond to a flexion-free situation, in which the fish is straight.

Preferably, said model assigns a different value of the contribution of each vertebra given an overall flexion, $\theta$, preferably according to the following formulation:

$$\sum_{i=0}^{i=19} d\theta_i = \theta; \qquad d\theta_i = \frac{\theta * \Delta\theta_i}{\sum_{i=0}^{19} \Delta\theta_j} \; ; \qquad \sum_{i=0}^{19} \Delta\theta_i = 16 \; ; \; \forall \, v_i \in v;$$

where $\theta$ represents the overall flexion and the values of the coefficients $\Delta\theta_i$ represent the contribution of the flexion of each vertebra $v_i$ to overall flexion $\theta$, preferably taking the following values:

$$\Delta\theta = [\, 0, \quad 0, \quad 0.64, \quad 0.64, \quad 0.48, \quad 0.48, \quad 0.0, \quad 0.0, \quad 0.0, \quad 0.0, \quad 0.48, \quad 0.64, \quad 0.8, \quad 0.96,$$
$$1.12, \quad 1.28, \quad 1.44, \quad 1.92, \quad 2.4, \quad 2.72 \,]$$

where the values are ordered consecutively from $v_0$ to $v_{19}$.

It is therefore possible to obtain a measurement of the size from the model even when the tuna flexes. It further allows better identifying the fish in the images obtained as it fits the swimming shape of the tuna according to the observations.

Preferably, said model also comprises translation and rotation parameters, whereby the model can be rotated an angle and moved by the image, which allows identifying the fish in any position.

Preferably, determining said value of the number of tuna that have passed through said region of water during said measurement interval using said echogram comprises the steps of:

- segmenting regions of said echogram by applying criteria of mathematical morphology, considering that said echogram is an image;
- obtaining segmented regions; and
- determining said value of the number of tuna as the value of the number of said segmented regions.

The echogram is thereby treated as if it were an image and image segmenting techniques are used to identify the regions susceptible to being a tuna.

Preferably, said criteria of mathematical morphology comprise echogram trace models for the tuna, such that said regions are segmented by morphological similarity with said trace models. A shape criterion that must have the echo of a tuna is therefore used, which allows fine-tuning the result and even separating overlap regions which would otherwise be complex. The morphological echogram trace model can be obtained based on periodic measurements of actual tuna for which a location verification can be ascertained, which allows enhancing said model and therefore the segmentation of the echogram.

In the context of acoustic sounding measurements, a measurement of the reflection coefficient of a sonar target is known as target strength, or TS. Its value is generally a negative number of decibels that varies with the features of the target, in this case a tuna.

Preferably, control parameters comprising one or more from the list consisting of the following are chosen:

- target strength, TS, margins; and
- tuna size margins;

wherein when segmenting regions of said echogram, those regions corresponding to values outside of said control parameters are discarded.

Those echoes departing from these patterns are thereby discarded. For example, for having too high or too low TS, or for being too large or too small. The echoes coming from structures, ships, other fish, etc., can thereby be eliminated.

It preferably comprises the additional step of processing said echogram to compensate an effect in said echogram caused by any of the parameters comprised in the list consisting of:

- water temperature;
- water salinity;
- water pH.

Measurements of said parameters of the water are therefore taken and the echogram is processed to compensate the effect that those physical parameters have on it, by having an influence, for example, on the speed of transmission of sound, which would result in echoes that are in an apparent location closer to or farther away from the actual position.

Preferably, a support structure connecting a first cage with a second cage is arranged, wherein said support structure has a first through window communicating with said first cage and a second through window communicating with said second cage, defining an area of passage for tuna between said first window and said second window, a direction of passage going horizontally from said first cage to said second cage, a first direction, which coincides with said direction of passage, and a second direction, which is horizontal and perpendicular to said first direction, thereby being defined; wherein said structure has a first profile when viewed in said first direction, and a second profile when viewed in said second direction; and wherein said measurement interval comprises a time at which a plurality of tuna travels from said first cage to said second cage in said direction of passage.

The method can therefore be used for the calculation of biomass in tuna transfer operations. In the context of the invention, the terms cage, purse seine or farm are used interchangeably. The tuna pass from one cage to another through a structure configured for that purpose and serving as a physical support for holding the technical elements of the invention.

Preferably, said acoustic sensor has a detection curtain beam with a wide side and a narrow side, said sensor being arranged such that said wide side extends in said second direction having a second beam width such that it covers all of said region of water, and said narrow side extends in said first direction having a first beam width less than 5°, preferably less than 2°, more preferably between 1° and 0.5°.

The acoustic sensor therefore covers the entire the area of passage, such that it detects all the fish passing through that region, but the attempt is made to measure the fish just once while they pass through the curtain. In the context of the art, beam width is considered to be defined by a -3 dB power drop.

Preferably, said acoustic sensor emits a pulse burst having a burst duration of less than 100 microseconds, more preferably less than 50 microseconds. The use of very short pulses together with a curtain beam that the fish pass through allows making acoustic response "slices" of the fish, with an echo that is clear even at high speeds of travel and overlapping, as may occur with tuna, which enhances spatial resolution and allows distinguishing cases of fish overlap. Alternatively or complementarily, the use of frequency-modulated pulses is preferred, together with techniques for the correlation of the echo with the emitted pulse, which is known as the pulse compression technique. This even further increases the signal-to-noise ratio, SNR, as well as the spatial resolution of the internal structure of the traces of each fish, thereby enhancing the distinction between fish.

Preferably, said acoustic sensor emits pulses that repeat with a frequency greater than or equal to 10 Hz, preferably between 30 and 40 Hz. So, for example, with a frequency of 30 Hz in which the detection pulse burst cycle is repeated (pulse repetition rate, prr), for fish with a length of 2 m travelling at a maximum speed of 60 km/h each fish receives at least two pulses, and therefore two slices are generated in the echogram, which has been experimentally found to be a minimum value to try to guarantee the detection. The maximum limit is also imposed by the distance from the sounder, for example, for a distance of 16 m to the upper part of the area of passage of the fish, the sound covers a total of 32 m back and forth, which at the typical speed of propagation of sound in water of 1500 m/s yields 21.3 milliseconds. The maximum burst frequency (prr) which prevents signal overlap between cycles would therefore be around 46 Hz.

Preferably, said acoustic sensor comprises an echo sounder and a wide beam transducer, wherein said second beam width has between 40° and 80°, preferably between 45° and 55°, more preferably 49°. These are experimental parameters that adapt to the most experimentally advisable measurements of the area of passage of the tuna for the case of the Mediterranean Sea and for the behavior of red tuna, as well as for the suitable depth at which the measurement means must be placed. Areas of passage 10 m deep by 10 m wide are common in the art. On the other hand, the image capture means should not be placed at an excessive depth because the turbidity of the water affects the clarity of the images. Therefore depths of more than 16 m are not appropriate. By simple trigonometry, it is determined that in this case, a centered transducer should have a wide beam of 80°, but the cost of a transducer with these features may be very high. For this reason, a lower-cost transducer of about 50° is chosen despite the fact that it does not cover the entire surface; although, in practice, only the lower corners are not covered and it is highly unlikely that fish will pass through that region given their observed behavior. Furthermore, beam width generally refers to that angle delimited by a drop of -3 dB, so even if attenuated, echoes are still received from angular distances greater than those of the beam width. Using the same criteria, the skilled person will have no problems in determining suitable values for other situations.

Preferably, said measurement means are positioned on the internal bottom of said support structure, centered with respect to said second direction, and wherein said acoustic sensor is positioned aimed in the vertical direction, such that said region of water is comprised in said area of passage. The location of the tuna is therefore determined by a vertical narrow curtain, such that the means try to receive the most ventral echo possible. The centered position is particularly advantageous if the structure is symmetrical with respect to said second direction with an also symmetrical area of passage.

Preferably, said measurement means are positioned such that they are centered with respect to said first direction. This is particularly advantageous for moving the acoustic measurements as far away as possible from the inside of said cages where they may be tuna. This results in fewer interferences and also in more suitable images.

Preferably, said second profile of said support structure has a rhombus shape, with an upper vertex and a lower vertex, and wherein said measurement means are positioned in said lower vertex and aimed in the vertical direction. Therefore, the shape of the structure makes it move away from the measurement means in the region closest to said means, minimizing interference with same. In turn, the narrow upper vertex of the structure minimizes the area of passage of the tuna, so it is easier for them to quickly go from one cage to another without swimming around inside them.

Preferably, said support structure has a pentagon-shaped second profile with an upper vertex and a planar lower base, wherein said measurement means are positioned on said planar base and wherein said image capture means are positioned aimed towards said first window or said second window. This prevents interference of the flotation structures of the cages which are joined together precisely in the upper vertex of the support structure, resulting in less contrast in the images because the sunlight is blocked. With this arrangement, the acoustic sensor measures in the vertical direction and the image capture means obtain said images with the back window through which sunlight enters without interferences. In contrast, both elements are misaligned and the measurement of the size of the tuna must take into account the angle at which the images are taken.

Preferably, said second profile of said support structure has a rectangular shape, with a planar lower part and a planar upper part, and wherein all of said measurement means are positioned in said lower part and aimed in the vertical direction. This provides a simple arrangement without shadows, at the expense of a larger distance between cages. This arrangement is preferred in the case of specimens the features of which do not entail a problem for passing from one cage to another through a relatively long passageway.

Preferably, said measurement means are arranged on the outside of said support structure and aimed in the vertical direction, positioned in said first cage such that said region of water is located opposite said first window, or in said second cage such that said region of water is located opposite said second window. The image and the echogram can thereby be vertical and have no shadows. This configuration is preferred in cases where the cages are large enough for the tuna that have already passed through to not interfere in the counting.

The invention also relates to a system for determining the biomass of tuna in a region of water, having measurement means comprising an acoustic sensor and image capture means, configured for being arranged submerged under said region of water, in known positions and aimed in an upward direction, wherein during a measurement interval in which tuna pass through said region of water:

- said acoustic sensor is configured for taking acoustic measurements by emitting acoustic signals and receiving echoes, thus generating an echogram; and

- said image capture means are configured for capturing images, generating a sequence of images containing images of said tuna;

said system further comprising analysis means configured for:

- determining a value of the number of tuna that have passed through said region of water during said measurement interval using said echogram;
- determining a tuna weight value using said sequence of images;
- determining a biomass value of tuna that have passed through said region of water during said measurement interval from said value of the number of tuna and from said tuna weight value.

The technical features and effects of said system are equivalent to those of the method described above, so for the sake of clarity they will not be repeated.

Determining said tuna weight value comprises:

- selecting tuna from said sequence of images;
- determining a calculation for the size value for each of said selected tuna;
- determining a calculation for the individual weight value for each of said selected tuna from said size value; and
- determining said tuna weight value as the mean value of said individual weight value for each of said selected tuna;

wherein said biomass value is determined as the multiplication of said value of the number of tuna by said tuna weight value.

Said sequence of images comprises a plurality of frames and wherein selecting tuna from said sequence of images comprises the following steps:

- segmenting said frames to obtain first candidate objects;
- filtering said first candidate objects by their geometric characteristics, obtaining second objects which are a subset of said first objects, wherein said second objects are selected as tuna.

Preferably, said image capture means comprise two optical sensors located in a relative position with respect to one another, such that said sequence of images comprises a stereoscopic sequence comprising a first sub-sequence of images and a second sub-sequence of images, both sub-sequences being synchronized; wherein said analysis means are configured for performing the additional steps of:

- selecting tuna that are present simultaneously in said first sub-sequence of images and in said second sub-sequence of images;
- determining a calculation for the distance value for said selected tuna, using the values of said relative position between said first optical sensor and said second optical sensor; and
- modifying said size value for each of the selected tuna using said distance value.

Preferably, selecting tuna that are present simultaneously in said first sub-sequence of images and in said second sub-sequence of images comprises selecting two characteristic points of each selected tuna in one of said first sub-sequence and said second sub-sequence, said two characteristic points preferably being the tip of the head and the tip of the tail, and projecting said two points into the other one of said first sub-sequence and said second sub-sequence, by means of epipolar lines; such that those tuna with said two characteristic points in one of said first sub-sequence and said second sub-sequence that correspond with two other characteristic points located on said epipolar lines in the other one of said first sub-sequence and said second sub-sequence are selected.

Preferably, determining a calculation for the distance value and modifying said size value for said selected tuna comprises the steps of:

- correcting lens distortion effects in said sequence of images;
- obtaining the distance value by triangulating each pair of points of said sequence of images, wherein said pair of points comprises a point in one of said first sub-sequence and said second sub-sequence, and a corresponding point in the other one of said first sub-sequence and said second sub-sequence; and
- modifying said size value for each selected tuna based on said distance value of said pairs of points corresponding to said selected tuna.

Preferably, selecting tuna from said sequence of images comprises the additional step of:

- fitting a tuna image model to said second objects, such that if the fitting error for one object exceeds an error threshold value, said object is discarded, whereas otherwise said object is considered to be a selected tuna and a fitted model is obtained; and wherein determining a calculation for the size value for each of said selected tuna comprises obtaining said size value from said fitted model of said selected tuna. Preferably, determining said value of the number of tuna that have passed through said region of water during said measurement interval using said echogram comprises the steps of:

- segmenting regions of said echogram by applying criteria of mathematical morphology, considering that said echogram is an image;
- obtaining segmented regions; and
- determining said value of the number of tuna as the value of the number of said segmented regions.

Preferably, said criteria of mathematical morphology comprise echogram trace models for the tuna, such that said regions are segmented by morphological similarity with said trace models.

Preferably, said analysis means are configured to allow choosing control parameters comprising one or more from the list consisting of:

- target strength, TS, margins; and
- tuna size margins;

wherein said analysis means are configured so that by segmenting regions of said echogram, those regions corresponding to values outside of said control parameters are discarded.

Preferably, said analysis means are additionally configured for processing said echogram to compensate an effect in said echogram caused by any of the parameters comprised in the list consisting of:

- water temperature;
- water salinity;
- water pH.

Preferably, the invention further comprises a support structure configured for being arranged in a usage position in which it connects a first cage with a second cage, wherein said support structure has a first through window communicating with said first cage and a second through window communicating with said second cage, defining an area of passage for tuna between said first window and said second window, a direction of passage going horizontally from said first cage to said second cage, a first direction, which coincides with said direction of passage, and a second direction, which is horizontal and perpendicular to said first direction, thereby being defined; wherein said structure has a first profile when viewed in said first direction, and a second profile when viewed in said second direction; and wherein said system is configured such that the measurement interval comprises a time at which a plurality of tuna travels from said first cage to said second cage in said direction of passage.

Preferably, said acoustic sensor has a detection curtain beam with a wide side and a narrow side, such that in said usage position said sensor is arranged such that said wide side extends in said second direction having a second beam width such that it covers all of said region of water, and said narrow side extends in said first direction having a first beam width less than 5°, preferably less than 2°, more preferably between 1° and 0.5°.

Preferably, said acoustic sensor is configured for emitting pulse bursts having a burst duration of less than 100 microseconds, more preferably less than 50 microseconds.

Preferably, said acoustic sensor is configured for emitting pulses having a repetition frequency greater than or equal to 10 Hz, preferably between 30 and 40 Hz.

Preferably, said acoustic sensor comprises an echo sounder and a wide beam transducer, wherein said second beam width has between 40° and 80°, preferably between 45° and 55°, more preferably 49°.

Preferably, in said usage position said measurement means are positioned on the internal bottom of said support structure, centered with respect to said second direction, and wherein said acoustic sensor is positioned aimed in the vertical direction, such that said region of water is comprised in said area of passage.

Preferably, in said usage position said measurement means are positioned such that they are centered with respect to said first direction.

Preferably, said second profile of said support structure has a rhombus shape, with an upper vertex and a lower vertex, and wherein in said usage position said measurement means are positioned in said lower vertex and aimed in the vertical direction.

Preferably, said support structure has a pentagon-shaped second profile with an upper vertex and a planar lower base, wherein in said usage position said measurement means are positioned in said planar base and wherein said image capture means are positioned aimed towards said first window or said second window.

Preferably, said second profile of said support structure has a rectangular shape, with a planar lower part and a planar upper part, and wherein in said usage position all of said measurement means are positioned in said lower part and aimed in the vertical direction.

Preferably, in said usage position said measurement means are positioned on the outside of said support structure and aimed in the vertical direction, positioned in said first cage such that said region of water is located opposite said first window, or in said second cage such that said region of water is located opposite said second window.

The invention also comprises other detail features illustrated in the detailed description of an embodiment of the invention and in the attached drawings.

Brief Description of the Drawings

The advantages and features of the invention will be understood from the following description in which preferred embodiments of the invention are described in reference to the drawings without limiting the scope of the main claim.

Figure 1 shows an exemplary joint display of the sequence of images and the echogram for an embodiment of the invention.

Figure 2 shows a graphical depiction of how to correlate a tuna by means of epipolar lines between two stereoscopic images.

Figure 3 shows a sequence of an exemplary segmentation method for an image of the sequence of images.

Figure 4 shows an exemplary tuna model.

Figures 5a, 5b and 5c show a sequence of a process of fitting candidate objects to the tuna model.

Figure 6 shows an exemplary echogram.

Figure 7 shows a segmented region of the echogram of Figure 6.

Figure 8 shows a schematic depiction of an embodiment of the invention with a rhombus-shaped structure.

Figure 9 shows a schematic depiction of an embodiment of the invention with a pentagonal-shaped structure and the image capture means aimed towards the second window.

Figure 10 shows a schematic depiction of an embodiment of the invention with a pentagonal-shaped structure and the image capture means aimed towards the first window.

Figure 11 shows a schematic depiction of an embodiment of the invention with a rectangular-shaped structure.

Figure 12 shows a schematic depiction of an embodiment of the invention with the measurement means outside of the support structure.

Figure 13 shows a schematic depiction of an embodiment of the invention in which a monitoring camera is added.

Figure 14 shows a schematic depiction of the perspective obtained by the monitoring camera of Figure 13.

Figure 15 shows a contour model of the tuna used to create a two-dimensional model.

Figure 16 shows a non-equitable flexion distribution along the segments of the spine of an exemplary tuna model.

Figure 17 shows three diagrams of possible tuna contours generated using the exemplary model, considering three cases of overall flexion of the tuna: $\theta=15°$, $\theta=30°$ and $\theta=45°$.

Figure 18 shows a graphical depiction of the five parameters of the exemplary model which define the tuna.

Figure 19 shows an actual example of the tuna detection process by means of fitting to an exemplary model.

Detailed Description of Embodiments of the Invention

In the embodiments described below, a system is used to carry out the counting of the biomass, the size and number of tuna for a region (1). To that end, measurement means (2) made up of two cameras acting to obtain a sequence of stereoscopic images with two sub-sequences, and an acoustic sensor made up of an echo sounder and a transducer, generating an echogram, are used. For use thereof, the measurement means (2) are installed submerged in a known position and aimed in an upward direction, such that ventral measurements of the tuna passing through the region of water (1) are taken. The echogram is used for determining the number of tuna, whereas the images are used for determining their size, and accordingly their weight.

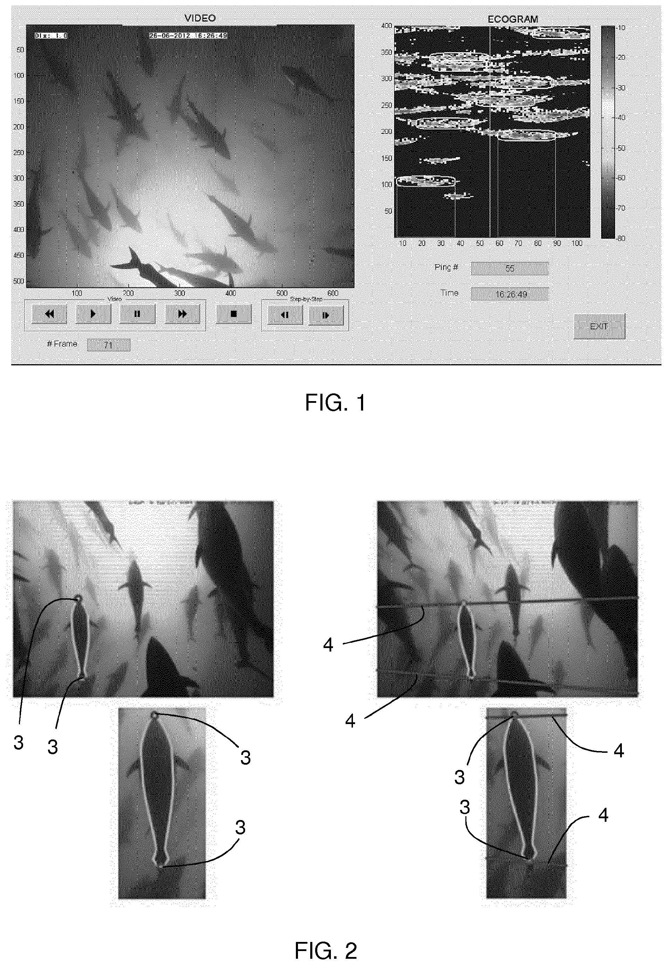

An exemplary display can be observed in Figure 1, in which an image captured by one of the cameras from the sequence of images and a fragment of the echogram for that moment are shown simultaneously. The contrast existing between the outlines of the tuna and the background can be seen despite the fact that it reaches a point where they can no longer be seen clearly due to turbidity. In this embodiment, both the cameras and the transducer are at the bottom of a fattening cage, and focused in the vertical direction. In this example, the transducer does not have a curtain beam but rather a cone or cardioid beam.

Figure 2 shows a graphical depiction of an exemplary selection of tuna according to the invention. This example uses two stereoscopic frames, one from each sub-sequence of images. Based on two characteristic points (3) of a tuna in a first frame, in this case the tip of the head and the tip of the tail, epipolar lines (4) are traced in the second stereoscopic frame from the other sub-sequence of images, and images in which their two characteristic points (3) are located on said epipolar lines (4) are sought out. A correspondence is thereby created between the tuna from the first frame and from the second frame, and it is considered to be the same tuna. Given that the relative positions of the cameras are known, the distance at which the tuna is located can be triangulated and compensation can be made for the measurement of size considering said distance. The lens distortion effect is likewise corrected.

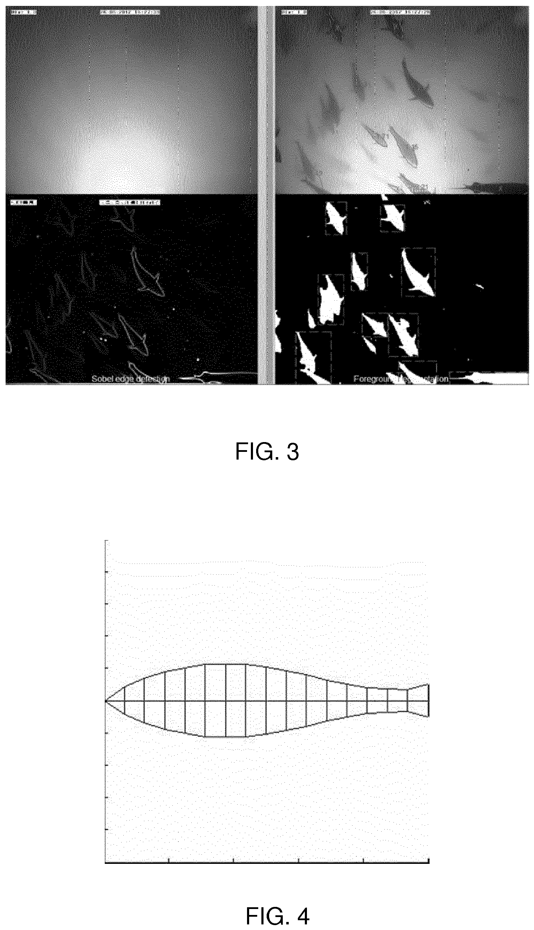

According to an exemplary embodiment of the invention, objects which correspond to tuna are selected from the frames of the sequence of images. To that end, a blob detection technique known in the field of computer image recognition is used. The detection of the regions which correspond to a candidate object is performed by means of local contrast criteria, since despite the fact that the brightness of the background and the fish can vary, the background is always lighter than the fish. The background can be seen in the upper left part of Figure 3. The lower left corner shows the outlines of the candidate objects whereas the regions which correspond to said candidate objects can be seen in the lower right area. Filtering is then performed according to geometric criteria of shape and size, ruling out those objects which are clearly not tuna, or which could not be suitably segmented. Outlines which correspond to those objects of the image that are considered tuna can be seen in the upper right part of Figure 3.

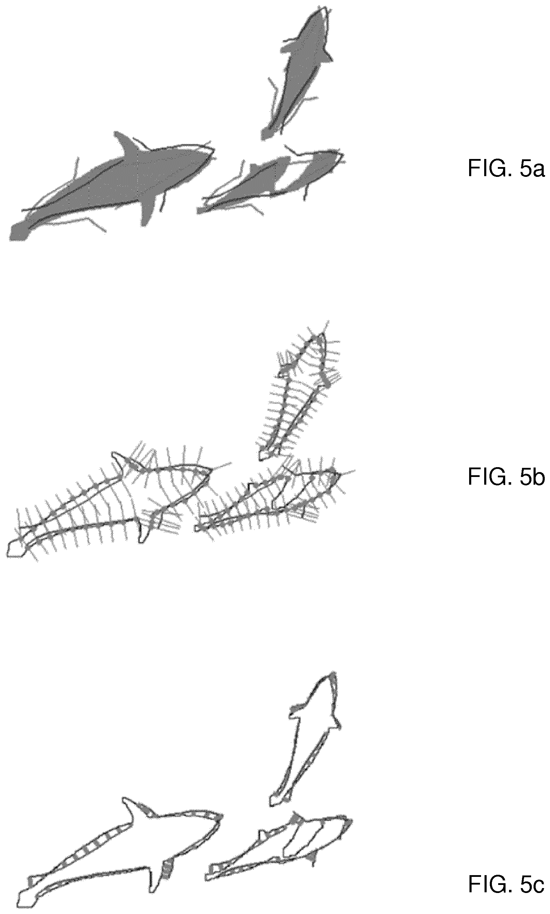

Another embodiment uses a tuna model for further fine-tuning the selection of regions. Figure 4 shows a simple example of said model; other examples can include fins or other characteristic elements of the outline of the tuna. Therefore, Figure 5a shows how a tuna model is fit in the regions corresponding to segmented candidate objects in the preceding case. Once the best position for the model is obtained, the fitting error is calculated. In the case of the example, the model has a plurality of points of outline; the error measured is the quadratic sum of the distance between the points of the model and those of the outline of the candidate object. If this error is too large, the candidate object is discarded. It can be seen in Figures 5a to 5c how, despite everything, outlines which actually correspond to two small (or far away) tuna have still been confused with the outline of a larger sized tuna. The enhancement of these cases is achieved by also enhancing the tuna model to be used. In this example, the size is derived from the dimensions of the model for those candidate objects that have been considered as tuna.

For the embodiment of the example, distance calculation strategies based on previously detailed stereoscopic images are used and sizes of tuna are obtained for those objects of the image which could be successfully processed. The weight of each of said selected tuna is then inferred and the mean weight is used for calculating the total biomass, the total value being the result of multiplying the mean weight by the number of tuna detected by means of acoustic techniques described hereinafter.

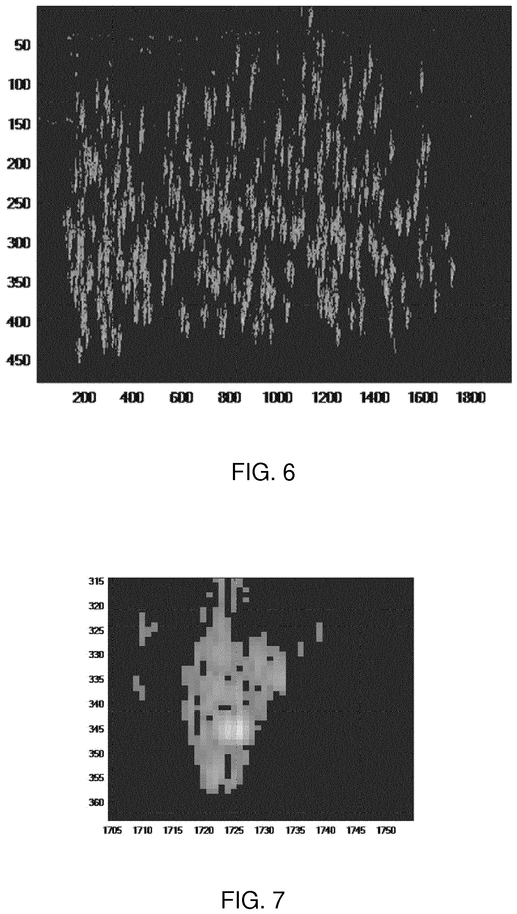

In the embodiment, an echogram like the one shown in Figure 6 is used. The echogram is segmented by image processing techniques based on morphological criteria for obtaining segmented regions like that of Figure 7. For the sake of clarity, morphological segmentation techniques are not described in detail given the wide range of such techniques in the art. Suffice it to say that shape criteria and the determination of regions by means of pre-established models of echogram traces expected to be found for tuna are used. In other words, a model of the ultrasound "fingerprint" of a tuna is used and regions similar to said fingerprints are sought out in the echogram, thereby obtaining the number of specimens. Given that the captured tuna usually have varying sizes and expected echo powers, ranges for these TS and size parameters are chosen and those regions of the echogram that are outside of these margins are filtered. On the other hand, water temperature, salinity and pH information are incorporated to compensate the echogram and eliminate the effects of the variations that these conditions may cause.

In the following embodiments of the invention, the method is applied to the counting and determination of size and biomass during the transfer operations for the transfer of the tuna between cages (6, 7), for example, from the capture seines to the transport cages, or from the transport cages to fattening farms. To that end, a support structure (5) which is connected to both cages (6, 7) and has through windows (8, 9) with said cages (6, 7) is used. Therefore, an area of passage of tuna between the first window (8) and the second window (9) is provided by opening the windows.

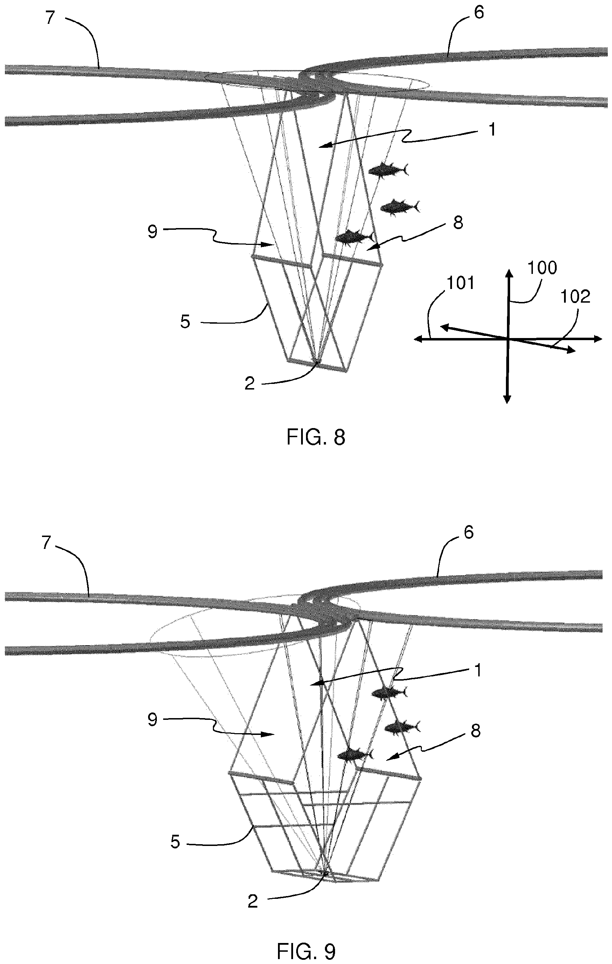

In the example of Figure 8, axes representing a first direction (101), which coincides with the direction of passage of the tuna, a second direction (102) that is horizontal and perpendicular to the first direction (101), as well as the vertical direction (100) have been depicted. Although it has only been depicted in this figure, the diagram is the same for Figures 9 to 13. In these examples, the measurement interval is the time at which the tuna pass from the first cage (6) to the second cage (7). Cameras with lenses having a focal length of 6 mm and a curtain transducer with a 0.5° aperture in the first direction (101) and a 49° aperture in the second direction (102), placed on the vertical direction (100), are used in the examples. The area of passage has dimensions of 10 m in the vertical direction (100) by 10 m in the second direction (102), and the measurement means are located at a depth of 16 m, so they are at 6 m from said area of passage. The 49° aperture therefore does not cover the entire area of passage, for which distance it would require an angle of 80°. However, there are two reasons for this selection, besides the difficulty of finding commercial transducers with such extreme beam widths: the first reason is that beam width refers to a drop of -3 dB, but it actually still receives a signal outside of that width, so in extreme cases, detection is still possible. The second reason is that increasing the depth has an effect on the image component, so the images would lose sharpness, particularly for a beam width of 49°, the distance to the passageway should be 11 m. In addition to the foregoing, the region that is outside of the main beam is located in the corners of the lower end part, where it is more unlikely the fish will pass through given their observed behavior.

In order to assure that at least two samples, sometimes called slices, of the fish are obtained at the speeds at which tuna pass from one cage to another, in the exemplary embodiments, the acoustic sensor emits pulse bursts of 64 microseconds per burst, repeated at a frequency of 10 Hz. Higher frequencies are preferred for being able to take more slices of the fish, although the cost of the equipment may be higher. The maximum for these exemplary configurations is about 46 Hz.

In an embodiment shown in Figure 8, a support structure (5) with a rhombus-shaped profile is used, such that the upper vertex is the point of connection between the two cages (6, 7). The cameras and the transducer are positioned such that they are centered in the inner vertex, pointing in the vertical direction (100), so the region of water (1) corresponds to the area of passage of tuna within the structure (5). The acoustic beams and cone of vision of the cameras are schematically depicted in Figure 8. The same is depicted for the rest of the figures from Figures 9 to 12.

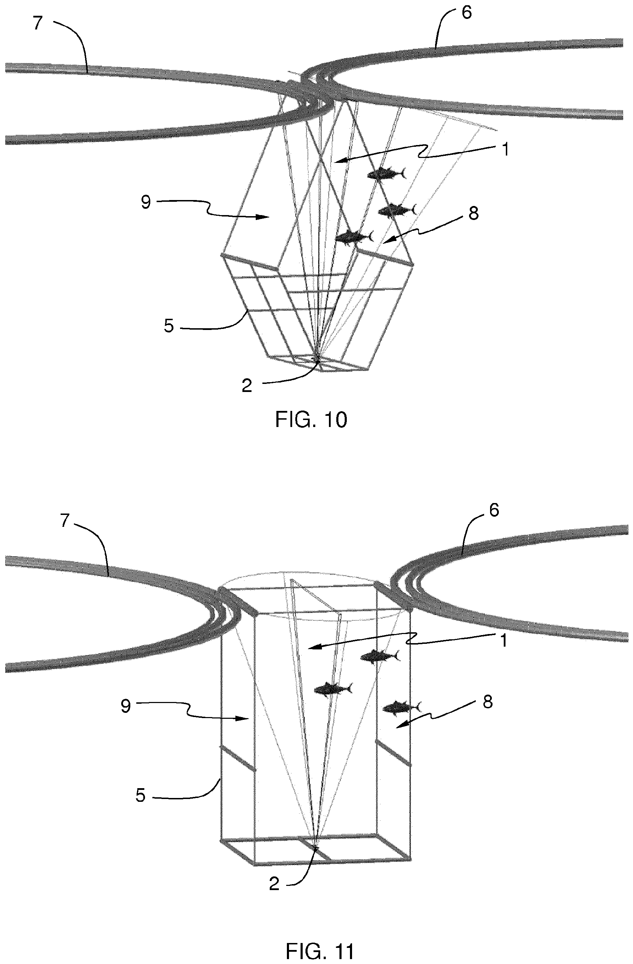

In another embodiment shown in Figures 9 and 10, a support structure (5) with a pentagonal-shaped profile is used, such that the upper vertex is the point of connection between the two cages (6, 7). The cameras and the transducer are positioned such that they are centered in the planar inner base of the structure (5). In this case, the transducer always points in the vertical direction (100), whereas the cameras point towards the second window (9) in the case of Figure 9 or the first window (8) in the case of Figure 10. The objective of this angling with respect to the vertical direction (100) is to prevent shadows of the actual flotation structures of the cages (6, 7).

Another embodiment shown in Figure 11 comprises a support structure (5) with a rectangular profile and in which all the measurement means point in the vertical direction (100), centered at the bottom of the structure (5).

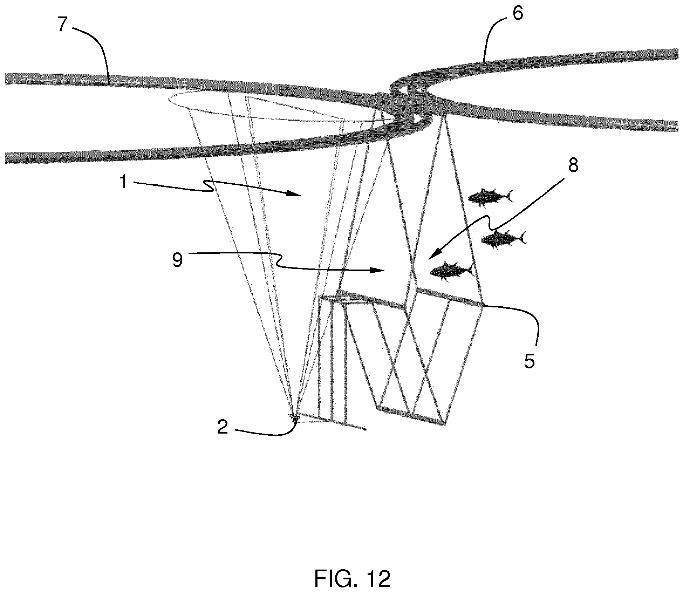

Finally, Figure 12 shows an alternative embodiment in which the measurement means are located outside of the internal area of passage of the structure (5) to prevent shadows. In the exemplified case it is located in the second cage (7) opposite the second window (9), but it could also be in the first cage (6) opposite the first window (9).

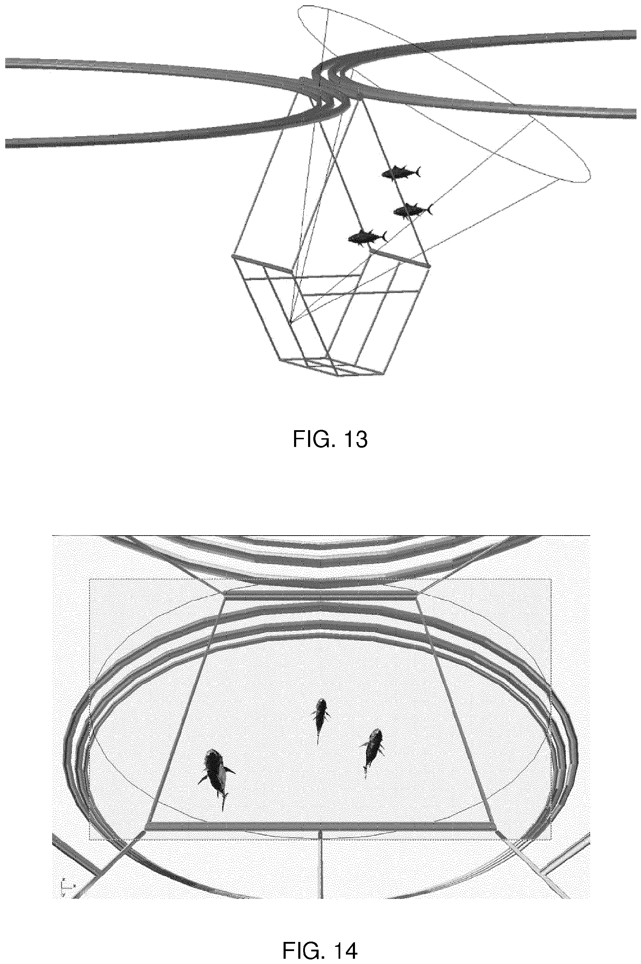

Finally, Figure 13 shows an embodiment in which a control camera has been added for the visual inspection of the tuna transfer operations. This camera is independent of the measurement means and is located pointing towards one of the windows (8, 9), preferably the first window (8). Figure 14 shows an example of the field of vision of the control camera.

Description of an Embodiment of the Tuna Model

An objective of the invention is the automatic segmentation of the images obtained by the capture means, as well as the extraction of the size characteristics of the tuna detected therein.

To that end, a tuna body model is proposed. Particularly, it is a two-dimensional model of the outline from a ventral perspective, which has the advantage of a simpler modeling than with a three-dimensional model, and which reduces the necessary computational cost. The model is furthermore deformable so as to fit the shapes that the tuna may adapt when it swims due to its movements and flexions, and allow obtaining precise values of size even in the event that the obtained outline is not the outline of the fish in a rectilinear position.

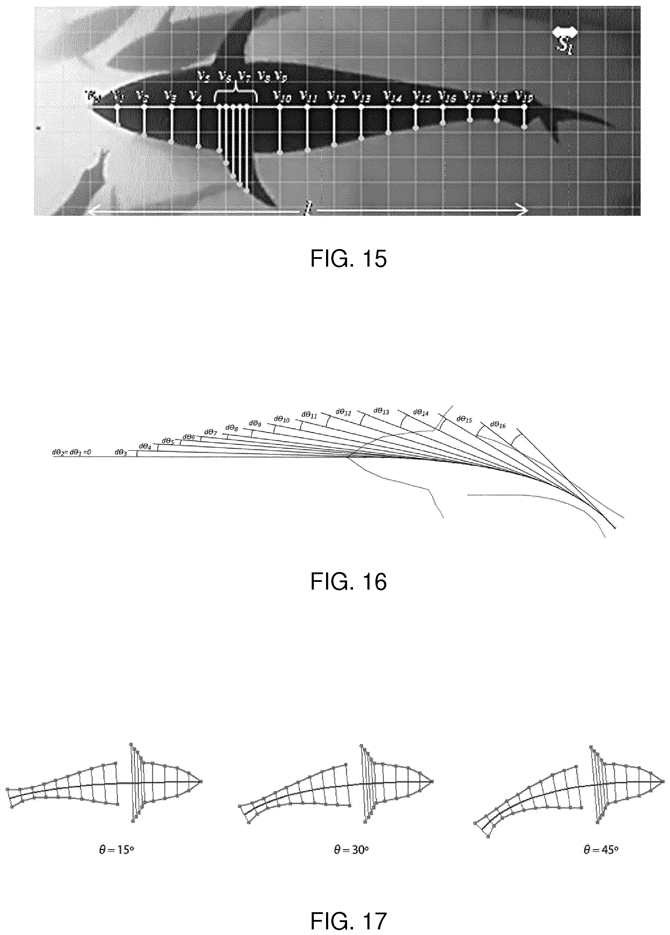

Therefore, the objective is to obtain a deformable 2D model that takes into account the curvature of the tuna body while it is swimming. The actual shape of the body of the red tuna seen in Figure 15 and information about the kinematics have been experimentally studied to transfer this knowledge to the model. The modeled shape corresponds to a bottom view of the tuna, since this perspective of the tuna body is fairly stable despite its movements and turns while swimming. The developed model takes into account the representative points of the outline of the tuna and its swimming motion. Reference points along the spine, and end points which correspond to the contour of the tuna can be seen in Figure 15. $S_l$ represents a measurement unit used as a reference in the model as a scale factor.

Therefore, the exemplary model shown in the drawings comprises a set K of 39 reference points (also called landmark) for the contour of the tuna body, with 19 reference points to represent each side of the tuna body and another point for the nose. From the longitudinal axis of the fish which would represent its spine and going from the tip of the mouth to the end of the caudal peduncle, sixteen equidistant sections are obtained for defining reference positions in the spine and for finding the possible limits of the body of the fish and modeling them. All this is based on the supposition that the body of the tuna under this perspective is virtually symmetrical with respect to its spine, when the tuna is a not flexed. Said vertebrae are labeled as $v_0$ and $v_{19}$ in Figure 15.

From 20 referenced vertebrae, a set of coefficients that allows estimating the ends of the border of the tuna body on both sides of the spine with respect to said vertebrae have been experimentally obtained. These coefficients relate vertebrae position and borders of the tuna body, taking the following values for the case of a tuna that is not flexed:

$$c^u = [0, \quad 0.7, \quad 1.15, \quad 1.35, \quad 1.55, \quad 1.65, \quad 2.0, \quad 2.5, \quad 2.8, \quad 3.15,$$
$$1.7, \quad 1.55, \quad 1.35, \quad 1.1, \quad 0.9, \quad 0.7, \quad 0.55, \quad 0.45,$$
$$0.5, \quad 0.75]$$

On the other hand, during the swimming movement tuna perform an overall flexion θ, defined as the angle formed between the first and the last vertebra. It has been observed that this overall flexion θ is not uniformly distributed along the length of the tuna body. It has been observed that each vertebra contributes differently to this overall flexion θ. The calculation of the flexion of each vertebra is based on the following expressions:

$$\sum_{i=0}^{i=19} d\theta_i = \theta; \qquad d\theta_i = \frac{\theta * \Delta\theta_i}{\sum_{i=0}^{19} \Delta\theta_j} \; ; \qquad \sum_{i=0}^{19} \Delta\theta_i = 16; \; \forall \, v_i \in v;$$

The values of the coefficients $\Delta\theta_i$ represent the contribution of the flexion of each vertebra to the overall flexion. After a study of the flexion of the individuals, the following values were obtained for the coefficients of head-to-tail flexion:

$$\Delta\theta = [\, 0, \; 0, \; 0.64, \; 0.64, \; 0.48, \; 0.48, \; 0.0, \; 0.0, \; 0.0, \; 0.0, \quad 0.48, \; 0.64, \; 0.8, \quad 0.96,$$
$$1.12, \quad 1.28, \quad 1.44, \quad 1.92, \; 2.4, \; 2.72 \,]$$

The values of these coefficients demonstrate high flexion in the vertebrae close to the tail and very little flexion in the head. In this case, the partial flexion of each vertebra would be obtained with the following expression:

$$d\theta_i = \frac{\theta * \Delta\theta_i}{\sum_{i=0}^{19} \Delta\theta_j} \; ; \qquad \sum_{i=0}^{19} \Delta\theta_i = 16; \; \forall \, v_i \in v;$$

The curvature of the spine of the tuna is calculated with the flexion of each vertebra, and the reference points for the contour of a detected tuna are obtained. Taking into account the coordinates of each vertebra $v_i = (x_i^v, y_i^v)$ , the coordinates of the landmarks $k_i = (x_i^k, y_i^k)$ are obtained using the following expressions:

$$x_i^k = x_i^v - S_l\, c_i\, \sin(\theta_i); \quad y_i^k = y_i^v + S_l\, c_i\, \cos(\theta_i); \quad i = 0, \dots, 19$$

$$x_i^k = x_{i-19}^v + S_l\, c_{i-19}\, \sin(\theta_{i-19}); \quad y_i^k = y_{i-19}^v - S_l\, c_{i-19}\, \cos(\theta_{i-19}); \quad i = 20, \dots, 39$$

Three possible shapes of the tuna using the exemplary model for three cases of overall flexion, e.g., $\theta$=15°, $\theta$=30° and $\theta$=45°, can be observed in Figure 17.

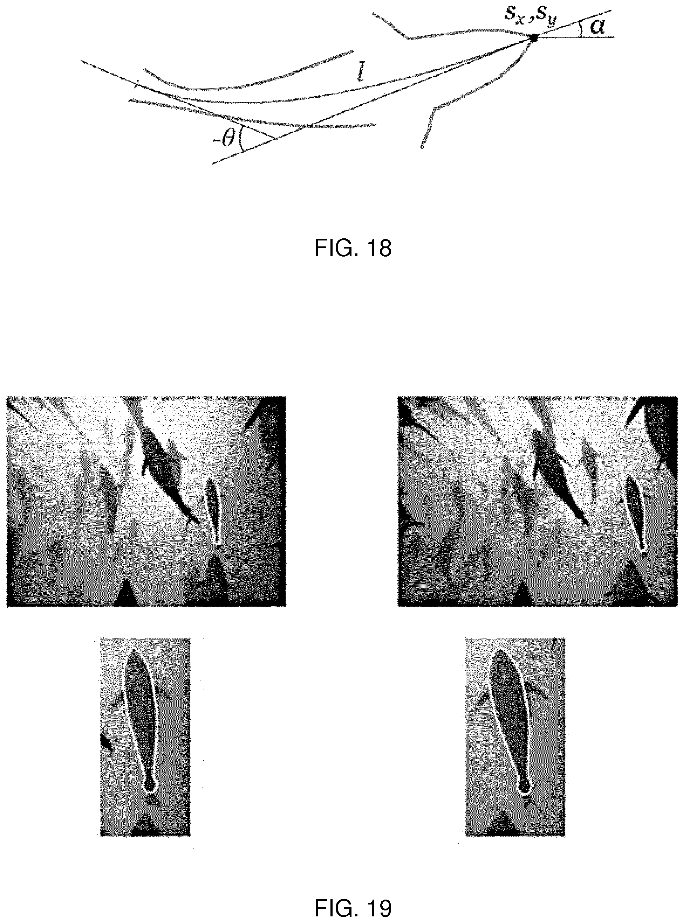

In addition to the flexion capacity by means of parameters $\theta$, the model introduces four parameters so that it can be adapted to the translation and rotation without changing its structural features. Figure 18 shows said parameters.

Therefore, the exemplary tuna model depicted by the letter M is defined by a vector of five parameters M = [$s_x$, $s_y$, $l$, $\alpha$, $\theta$] where:

- $s_x$ and $s_y$ are translation parameters providing the location in the image of the nose;
- $l$ is the length of the spine ($l$ = 16 $S_l$), which provides the scale factor;
- $\alpha$ indicates the rigid rotation of the model, defined as the angle of the head of the fish in relation to the horizontal axis; and
- $\theta$ is the angle of overall flexion of the spine.

For this example, a phase of fitting each of the images of the stereoscopic sequence to the model is performed in the tuna detection process. The objective of the fitting process is to obtain optimal values for the parameters of the 2D model which best fit a blob that is a candidate to be tuna. The model is adjusted to minimize a model-image discrepancy measurement based on the limits of the candidate in the image. This fitting must minimize the discrepancy measurement between the edges of the model and the edges of the segmented blob or the segmented tuna of the image. The parameters of the model are initialized taking into account parameters of the blob obtained after the segmentation and are adjusted and recalculated until a better fitting is no longer obtained.

A fitting error index (FEI) based on the quadratic distance between the characteristic points of the model and those of the segmented blob has been defined. Figures 5a to 5c illustrate the fitting process carried out and Figure 19 shows an actual example. In this case, a tuna model without lateral fins and including peduncle modeling is used. Furthermore, the image represents the process for the pair of stereoscopic images and a tuna without any occultation or overlapping with others has been automatically selected to obtain reliable biometric measurements.

The person skilled in the art will understand that other more detailed models, for example, a model with a larger number of vertebrae, can be derived from this model by adding a peduncle modeling of the fish, or even models with a non-constant distribution of the vertebrae. It is therefore possible to obtain greater precision in the calculated biometric measurements which provide the length of the fish taking into account the flexion and the width of the fish.

**Claims**

1. A computer-implemented method for determining the biomass of tuna in a region of water (1), wherein measurement means (2) comprising an acoustic sensor and image capture means are arranged submerged under said region of water (1), said measurement means (2) being in known positions and aimed in an upward direction, wherein the method comprises the following steps:

   - during a measurement interval in which tuna pass through said region of water (1):

     - said acoustic sensor takes acoustic measurements by emitting acoustic signals and receiving echoes, thus generating an echogram; and
     - said image capture means capture images, generating a sequence of images containing images of said tuna;

   further comprising the steps of:

     - determining a value of the number of tuna that have passed through said region of water (1) during said measurement interval using said echogram;
     - determining a tuna weight value using said sequence of images;
     - determining a biomass value of tuna that have passed through said region of water (1) during said measurement interval from said value of the number of tuna and from said tuna weight value;

   wherein determining said tuna weight value comprises:

     - selecting tuna from said sequence of images;
     - determining a calculation for the size value for each of said selected tuna;
     - determining a calculation for the individual weight value for each of said selected tuna from said size value;

and
- determining said tuna weight value as the mean value of said individual weight value for each of said selected tuna;

wherein said biomass value is determined as the multiplication of said value of the number of tuna by said tuna weight value; wherein said sequence of images comprises a plurality of frames, and wherein selecting tuna from said sequence of images comprises the following steps:

- segmenting said frames to obtain first candidate objects;
- filtering said first candidate objects by their geometric characteristics, obtaining

second objects which are a subset of said first objects, wherein said second objects are selected as tuna.

2. The method according to claim 1, **characterized in that** said image capture means comprise two optical sensors located in a relative position with respect to one another, such that said sequence of images comprises a stereoscopic sequence comprising a first sub-sequence of images and a second sub-sequence of images, both sub-sequences being synchronized; wherein said method comprises the additional steps of:

- selecting tuna that are present simultaneously in said first sub-sequence of images and in said second sub-sequence of images;
- determining a calculation for the distance value for said selected tuna, using the values of said relative position between said first optical sensor and said second optical sensor; and
- modifying said size value for each of the selected tuna using said distance value.

3. The method according to claim 2, **characterized in that** selecting tuna that are present simultaneously in said first sub-sequence of images and in said second sub-sequence of images comprises selecting two characteristic points (3) of each selected tuna in one of said first sub-sequence and said second sub-sequence, said two characteristic points (3) preferably being the tip of the head and the tip of the tail, and projecting said two points into the other one of said first sub-sequence and said second sub-sequence, by means of epipolar lines (4); such that those tuna with said two characteristic points (3) in one of said first sub-sequence and said second sub-sequence that correspond with two other characteristic points (3) located on said epipolar lines (4) in the other one of said first sub-sequence and said second sub-sequence are selected.

4. The method according to any of claims 1 to 3, **characterized in that** selecting tuna from said sequence of images comprises the additional step of:

- fitting a tuna image model to said second objects, such that if the fitting error for one object exceeds an error threshold value, said object is discarded, whereas otherwise said object is considered to be a selected tuna and a fitted model is obtained;

and wherein determining a calculation for the size value for each of said selected tuna comprises obtaining said size value from said fitted model of said selected tuna.

5. The method according to claim 4, **characterized in that** said tuna image model comprises a model in segments, wherein points, called vertebrae, $v_i$, located along the axis of the tuna are used; preferably 20 points, numbered from vertebra 0 ($v_0$), which corresponds to the tip of the head, to vertebra 19 ($v_{19}$), which corresponds to the end of the tail.

6. The method according to any one of claims 1 to 5, **characterized in that** determining said value of the number of tuna that have passed through said region of water (1) during said measurement interval using said echogram comprises the steps of:

- segmenting regions of said echogram by applying criteria of mathematical morphology, considering that said echogram is an image;
- obtaining segmented regions; and
- determining said value of the number of tuna as the value of the number of said segmented regions;

wherein said criteria of mathematical morphology preferably comprise echogram trace models for the tuna, such that said regions are segmented by morphological similarity with said trace models.

7.  The method according to any one of claims 1 to 6, **characterized in that** a support structure (5) connecting a first cage (6) with a second cage (7) is arranged, wherein said support structure (5) has a first through window (8) communicating with said first cage (6) and a second through window (9) communicating with said second cage (7), defining an area of passage for tuna between said first window (8) and said second window (9), a direction of passage going horizontally from said first cage (6) to said second cage (7), a first direction (101), which coincides with said direction of passage, and a second direction, (102) which is horizontal and perpendicular to said first direction (101), thereby being defined; wherein said structure has a first profile when viewed in said first direction (101), and a second profile when viewed in said second direction (102); and wherein said measurement interval comprises a time at which a plurality of tuna travels from said first cage (6) to said second cage (7) in said direction of passage.

8.  The method according to claim 7, **characterized in that** said acoustic sensor has a detection curtain beam with a wide side and a narrow side, said sensor being arranged such that said wide side extends in said second direction (102) having a second beam width such that it covers all of said region of water (1), and said narrow side extends in said first direction (101) having a first beam width less than 5°, preferably less than 2°, more preferably between 1° and 0.5°.

9.  The method according to claim 8, **characterized in that** said acoustic sensor comprises an echo sounder and a wide beam transducer, wherein said second beam width has between 40° and 80°, preferably between 45° and 55°, more preferably 49°.

10. The method according to either one of claim 8 or 9, **characterized in that** said measurement means (2) are positioned on the internal bottom of said support structure (5), centered with respect to said second direction (102), and also preferably centered with respect to said first direction (101), and wherein said acoustic sensor is positioned aimed in the vertical direction (100), such that said region of water (1) is comprised in said area of passage.

11. The method according to claim 10, **characterized in that** said second profile of said support structure (5) has a rhombus shape, with an upper vertex and a lower vertex, and wherein said measurement means (2) are positioned in said lower vertex and aimed in the vertical direction (100).

12. The method according to claim 10, **characterized in that** said support structure (5) has a pentagon-shaped second profile with an upper vertex and a planar lower base, wherein said measurement means (2) are positioned on said planar base and wherein said image capture means are positioned aimed towards said first window (8) or said second window (9).

13. The method according to claim 10, **characterized in that** said second profile of said support structure (5) has a rectangular shape, with a planar lower part and a planar upper part, and wherein all of said measurement means (2) are positioned in said lower part and aimed in the vertical direction (100).

14. A system for determining the biomass of tuna in a region of water (1), having measurement means (2) comprising an acoustic sensor and image capture means, configured for being arranged submerged under said region of water (1), in known positions and aimed in an upward direction, wherein during a measurement interval in which tuna pass through said region of water (1):

    - said acoustic sensor is configured for taking acoustic measurements by emitting acoustic signals and receiving echoes, thus generating an echogram; and
    - said image capture means are configured for capturing images, generating a sequence of images containing images of said tuna;
    said system further comprising analysis means configured for:
    - determining a value of the number of tuna that have passed through said region of water (1) during said measurement interval using said echogram;
    - determining a tuna weight value using said sequence of images;
    - determining a biomass value of tuna that have passed through said region of water (1) during said measurement interval from said value of the number of tuna and from said tuna weight value;
    wherein determining said tuna weight value comprises:
    - selecting tuna from said sequence of images;

- determining a calculation for the size value for each of said selected tuna;
- determining a calculation for the individual weight value for each of said selected tuna from said size value; and
- determining said tuna weight value as the mean value of said individual weight value for each of said selected tuna;
wherein said biomass value is determined as the multiplication of said value of the number of tuna by said tuna weight value; wherein said sequence of images comprises a plurality of frames and wherein selecting tuna from said sequence of images comprises the following steps:
- segmenting said frames to obtain first candidate objects;
- filtering said first candidate objects by their geometric characteristics, obtaining second objects which are a subset of said first objects, wherein said second objects are selected as tuna.

**Patentansprüche**

1. Computerimplementiertes Verfahren zur Bestimmung der Biomasse von Thunfisch in einem Wassergebiet (1), wobei Messmittel (2), die einen akustischen Sensor und Bilderfassungsmittel umfassen, unter dem Wassergebiet (1) untergetaucht angeordnet sind, wobei sich die Messmittel (2) an bekannten Positionen befinden und in einer Aufwärtsrichtung ausgerichtet sind, wobei das Verfahren die folgenden Schritte umfasst:

   - während eines Messintervalls, in dem Thunfische den Wasserbereich (1) durchqueren:

     - Durchführen von Messungen mittels des Akustiksensors durch Emittieren von akustischen Signalen und Empfangen von Echos, wodurch ein Echogramm erzeugt wird; und
     - Erfassen von Bildern mittels der Bilderfassungsmittel, wodurch eine Folge von Bildern erzeugt wird, die Bilder der Thunfische umfasst;

   ferner folgende Schritte umfassend:

     - Bestimmen eines Werts der Anzahl von Thunfischen, die den Wasserbereich (1) während des Messintervalls durchquert haben, unter Verwendung des Echogramms;
     - Bestimmen eines Thunfisch-Gewichtswerts unter Verwendung der Folge von Bildern;
     - Bestimmen eines Biomassewerts von Thunfischen, die den Wasserbereich (1) während des Messintervalls durchquert haben, anhand des Werts der Anzahl von Thunfischen und anhand des Thunfisch-Gewichtswerts;

   wobei das Bestimmen des Thunfisch-Gewichtswerts Folgendes umfasst:

     - Auswählen von Thunfischen aus der Folge von Bildern;
     - Bestimmen einer Berechnung für den Größenwert für jeden der ausgewählten Thunfische;
     - Bestimmen einer Berechnung für den individuellen Gewichtswert für jeden der ausgewählten Thunfische anhand des Größenwerts; und
     - Bestimmen des Thunfisch-Gewichtswerts als den Mittelwert des individuellen Gewichtswerts für jeden der ausgewählten Thunfische;
   wobei der Biomassewert als die Multiplikation von dem Wert der Anzahl von Thunfischen mit dem Thunfisch-Gewichtswert bestimmt wird;
   wobei die Folge von Bildern eine Vielzahl von Einzelbildern umfasst, und
   wobei das Auswählen von Thunfischen aus der Folge von Bildern die folgenden Schritte umfasst:

     - Segmentieren der Einzelbilder, um erste infrage kommende Objekte zu erhalten;
     - Filtern der ersten infrage kommenden Objekte nach ihren geometrischen Eigenschaften, wodurch zweite Objekte erhalten werden, die eine Teilmenge der ersten Objekte sind, wobei die zweiten Objekte als Thunfische ausgewählt werden.

2. Verfahren nach Anspruch 1, **dadurch gekennzeichnet, dass** die Bilderfassungsmittel zwei optische Sensoren umfassen, sie sich in einer Relativposition in Bezug zueinander befinden, sodass die Folge von Bildern eine stereoskopische Folge umfasst, die eine erste Teilfolge von Bildern und eine zweite Teilfolge von Bildern umfasst, wobei beide Folgen synchronisiert sind; wobei das Verfahren die folgenden zusätzlichen Schritte umfasst:

- Auswählen von Thunfischen, die in der ersten Teilfolge von Bildern und in der zweiten Teilfolge von Bildern gleichzeitig vorhanden sind;
- Bestimmen einer Berechnung für den Entfernungswert der ausgewählten Thunfische unter Verwendung der Werte der Relativposition zwischen dem ersten optischen Sensor und dem zweiten optischen Sensor; und
- Modifizieren des Größenwerts für jeden der ausgewählten Thunfische unter Verwendung des Entfernungswerts.

3. Verfahren nach Anspruch 2, **dadurch gekennzeichnet, dass** das Auswählen von Thunfischen, die in der ersten Teilfolge von Bildern und in der zweiten Teilfolge von Bildern gleichzeitig vorhanden sind, ein Auswählen von zwei charakteristischen Punkten (3) von jedem ausgewählten Thunfisch in einer von der ersten Teilfolge und der zweiten Teilfolge, wobei die zwei charakteristischen Punkte (3) vorzugsweise die Spitze des Kopfs und die Spitze des Schwanzes sind, und ein Projizieren der zwei Punkte in die andere von der ersten Teilfolge und der zweiten Teilfolge mittels epipolarer Linien (4) umfasst; sodass solche Thunfische mit den zwei charakteristischen Punkten (3) in einer von der ersten Teilfolge und der zweiten Teilfolge, die den zwei anderen charakteristischen Punkten (3), die sich auf den epipolaren Linien (4) in der anderen von der ersten Teilfolge und der zweiten Teilfolge befinden, entsprechen, ausgewählt werden.

4. Verfahren nach einem der Ansprüche 1 bis 3, **dadurch gekennzeichnet, dass** das Auswählen von Thunfischen aus der Folge von Bildern den folgenden zusätzlichen Schritt umfasst:

- Anpassen eines Thunfischmodells auf die zweiten Objekte derart, dass, wenn der Anpassungsfehler für ein Objekt einen Fehlerschwellenwert überschreitet, das Objekt verworfen wird, wohingegen das Objekt anderenfalls als ein ausgewählter Thunfisch erachtet wird und ein angepasstes Modell erhalten wird;

und wobei das Bestimmen einer Berechnung für den Größenwert für jeden der ausgewählten Thunfische ein Erhalten des Größenwerts anhand des angepassten Modells des ausgewählten Thunfischs umfasst.

5. Verfahren nach Anspruch 4, **dadurch gekennzeichnet, dass** das Thunfisch-Bildmodell ein Modell in Segmenten umfasst, wobei als Wirbel $v_i$ bezeichnete Punkte, die sich entlang der Achse der Thunfische befinden, verwendet werden; vorzugsweise 20 Punkte, durchnummeriert von Wirbel 0 ($v_0$), was der Spitze des Kopfs entspricht, bis Wirbel 19 ($v_{19}$), was dem Ende des Schwanzes entspricht.

6. Verfahren nach einem der Ansprüche 1 bis 5, **dadurch gekennzeichnet, dass** das Bestimmen des Werts der Anzahl von Thunfischen, die den Wasserbereich (1) während des Messintervalls durchquert haben, unter Verwendung des Echogramms die folgenden Schritte umfasst:

- Segmentieren von Bereichen des Echogramms durch Anwenden von Kriterien mathematischer Morphologie, unter der Berücksichtigung, dass das Echogramm ein Bild ist;
- Erhalten von segmentierten Bereichen; und
- Bestimmen des Werts der Anzahl von Thunfischen als den Wert der Anzahl von segmentierten Bereichen; wobei die Kriterien mathematischer Morphologie vorzugsweise Echogramm-Spurenmodelle für die Thunfische umfassen, sodass die Bereiche nach morphologischer Ähnlichkeit zu den Spurenmodellen segmentiert werden.

7. Verfahren nach einem der Ansprüche 1 bis 6, **dadurch gekennzeichnet, dass** eine Stützstruktur (5), die einen ersten Käfig (6) mit einem zweiten Käfig (7) verbindet, angeordnet wird, wobei die Stützstruktur (5) ein erstes Durchgangsfenster (8), das in Verbindung mit dem ersten Käfig (6) steht, und ein zweites Durchgangsfenster (9), das in Verbindung mit dem zweiten Käfig (7) steht, aufweist, wobei ein Durchquerungsbereich für Thunfische zwischen dem ersten Fenster (8) und dem zweiten Fenster (9) definiert wird, wobei eine Durchquerungsrichtung horizontal von dem ersten Käfig (6) zu dem zweiten Käfig (7) verläuft, wodurch eine erste Richtung (101), die mit der Durchquerungsrichtung übereinstimmt, und eine zweite Richtung (102), die horizontal und senkrecht zu der ersten Richtung (101) ist, definiert werden; wobei die Struktur, bei Betrachtung in der ersten Richtung (101), ein erstes Profil und, bei Betrachtung in der zweiten Richtung (102), ein zweites Profil aufweist; und wobei das Messintervall einen Zeitpunkt umfasst, zu dem sich eine Vielzahl von Thunfischen in der Durchquerungsrichtung von dem ersten Käfig (6) zu dem zweiten Käfig (7) bewegt.

8. Verfahren nach Anspruch 7, **dadurch gekennzeichnet, dass** der akustische Sensor einen Detektionsschleierstrahl mit einer breiten Seite und einer schmalen Seite aufweist, wobei der Sensor so angeordnet ist, dass sich die breite Seite in der zweiten Richtung (102) erstreckt, wobei er eine zweite Strahlbreite derart aufweist, dass er den gesamten Wasserbereich (1) abdeckt, und sich die schmale Seite in der ersten Richtung (101) erstreckt, wobei er eine erste Strahlbreite von weniger als 5°, vorzugsweise weniger als 2°, noch bevorzugter zwischen 1° und 0,5°, aufweist.

9. Verfahren nach Anspruch 8, **dadurch gekennzeichnet, dass** der akustische Sensor ein Echolot und einen Breitstrahlwandler umfasst, wobei die zweite Strahlbreite zwischen 40° und 80°, vorzugsweise zwischen 45° und 55°, noch bevorzugter 49°, beträgt.

10. Verfahren nach einem der Ansprüche 8 oder 9, **dadurch gekennzeichnet, dass** die Messmittel (2) auf dem Innenboden der Stützstruktur (5), zentriert in Bezug auf die zweite Richtung (102), und vorzugsweise auch zentriert in Bezug auf die erste Richtung (101), positioniert sind, und wobei der akustische Sensor so positioniert ist, dass er in der vertikalen Richtung (100) ausgerichtet ist, sodass der Wasserbereich (1) in dem Durchquerungsgebiet umfasst ist.

11. Verfahren nach Anspruch 10, **dadurch gekennzeichnet, dass** das zweite Profil der Stützstruktur (5) eine Rhombusform, mit einem oberen Scheitelpunkt und einem unteren Scheitelpunkt, aufweist, und wobei die Messmittel (2) an dem unteren Scheitelpunkt positioniert sind und in der vertikalen Richtung (100) ausgerichtet sind.

12. Verfahren nach Anspruch 10, **dadurch gekennzeichnet, dass** die Stützstruktur (5) ein fünfeckförmiges zweites Profil mit einem oberen Scheitelpunkt und einer ebenflächigen unteren Basis aufweist, wobei die Messmittel (2) auf der ebenflächigen Basis positioniert sind, und wobei die Bilderfassungsmittel auf das erste Fenster (8) oder das zweite Fenster (9) ausgerichtet positioniert sind.

13. Verfahren nach Anspruch 10, **dadurch gekennzeichnet, dass** das zweite Profil der Stützstruktur (5) eine Rechteckform, mit einem ebenflächigen unteren Teil und einem ebenflächigen oberen Teil, aufweist, und wobei alle der Messmittel (2) in dem unteren Teil positioniert sind und in der vertikalen Richtung (100) ausgerichtet sind.

14. System zur Bestimmung der Biomasse von Thunfisch in einem Wasserbereich (1), das Messmittel (2) aufweist, die einen akustischen Sensor und Bilderfassungsmittel umfassen, die so ausgestaltet sind, dass sie, an bekannten Positionen und in einer Aufwärtsrichtung ausgerichtet, unter dem Wassergebiet (1) untergetaucht angeordnet sind, wobei während eines Messintervalls, in dem Thunfische den Wasserbereich (1) durchqueren:

- der akustische Sensor ausgestaltet ist zum Durchführen von akustischen Messungen mittels Emittieren von akustischen Signalen und Empfangen von Echos, wodurch ein Echogramm erzeugt wird; und
- die Bilderfassungsmittel ausgestaltet sind zum Erfassen von Bildern, wodurch eine Folge von Bildern erzeugt wird, die Bilder der Thunfische umfasst;

wobei das System ferner Analysemittel umfasst, die ausgestaltet sind zum:

- Bestimmen eines Werts der Anzahl von Thunfischen, die den Wasserbereich (1) während des Messintervalls durchquert haben, unter Verwendung des Echogramms;
- Bestimmen eines Thunfisch-Gewichtswerts unter Verwendung der Folge von Bildern;
- Bestimmen eines Biomassewerts von Thunfischen, die den Wasserbereich (1) während des Messintervalls durchquert haben, anhand des Werts der Anzahl von Thunfischen und anhand des Thunfisch-Gewichtswerts;

wobei das Bestimmen des Thunfisch-Gewichtswerts Folgendes umfasst:

- Auswählen von Thunfischen aus der Folge von Bildern;
- Bestimmen einer Berechnung für den Größenwert für jeden der ausgewählten Thunfische;
- Bestimmen einer Berechnung für den individuellen Gewichtswert für jeden der ausgewählten Thunfische anhand des Größenwerts; und
- Bestimmen des Thunfisch-Gewichtswerts als den Mittelwert des individuellen Gewichtswerts für jeden der ausgewählten Thunfische;
wobei der Biomassewert als die Multiplikation von dem Wert der Anzahl von Thunfischen mit dem Thunfisch-Gewichtswert bestimmt wird;
wobei die Folge von Bildern eine Vielzahl von Einzelbildern umfasst, und
wobei das Auswählen von Thunfischen aus der Folge von Bildern die folgenden Schritte umfasst:

- Segmentieren der Einzelbilder, um erste infrage kommende Objekte zu erhalten;

- Filtern der ersten infrage kommenden Objekte nach ihren geometrischen Eigenschaften, wodurch zweite Objekte erhalten werden, die eine Teilmenge der ersten Objekte sind, wobei die zweiten Objekte als Thunfische ausgewählt werden.

**Revendications**

1. Procédé mis en œuvre par ordinateur pour déterminer la biomasse de thons dans une région d'eau (1), dans lequel des moyens de mesure (2) comprenant un capteur acoustique et des moyens de capture d'images sont agencés en immersion sous ladite région d'eau (1), lesdits moyens de mesure (2) étant dans des positions connues et orientés dans une direction ascendante, dans lequel le procédé comprend les étapes suivantes :

   - pendant un intervalle de mesure dans lequel des thons traversent ladite région d'eau (1) :
   - ledit capteur acoustique prend des mesures acoustiques en émettant des signaux acoustiques et en recevant des échos, générant ainsi un échogramme ; et
   - lesdits moyens de capture d'images capturent des images, générant une séquence d'images contenant des images desdits thons ;
   comprenant en outre les étapes consistant à :
   - déterminer une valeur du nombre de thons qui ont traversé ladite région d'eau (1) pendant ledit intervalle de mesure en utilisant ledit échogramme ;
   - déterminer une valeur de poids de thon en utilisant ladite séquence d'images ;
   - déterminer une valeur de biomasse de thons qui ont traversé ladite région d'eau (1) pendant ledit intervalle de mesure à partir de ladite valeur du nombre de thons et à partir de ladite valeur de poids de thon ;
   dans lequel la détermination de ladite valeur de poids de thon comprend :
   - la sélection de thons à partir de ladite séquence d'images ;
   - la détermination d'un calcul pour la valeur de taille pour chacun desdits thons sélectionnés ;
   - la détermination d'un calcul pour la valeur de poids individuelle pour chacun desdits thons sélectionnés partir de ladite valeur de taille ; et
   - la détermination de ladite valeur de poids de thon comme la valeur moyenne de ladite valeur de poids individuelle pour chacun desdits thons sélectionnés ;
   dans lequel ladite valeur de biomasse est déterminée comme la multiplication de ladite valeur du nombre de thons par ladite valeur de poids de thon ;
   dans lequel ladite séquence d'images comprend une pluralité de trames, et
   dans lequel la sélection de thons à partir de ladite séquence d'images comprend les étapes suivantes :

      - la segmentation desdites trames pour obtenir des premiers objets candidats ;
      - le filtrage desdits premiers objets candidats par leurs caractéristiques géométriques, pour obtenir des deuxièmes objets qui sont un sous-ensemble desdits premiers objets, dans lequel lesdits deuxièmes objets sont sélectionnés comme étant des thons.

2. Procédé selon la revendication 1, **caractérisé en ce que** lesdits moyens de capture d'images comprennent deux capteurs optiques situés dans une position relative l'un par rapport à l'autre, de sorte que ladite séquence d'images comprenne une séquence stéréoscopique comprenant une première sous-séquence d'images et une deuxième sous-séquence d'images, les deux sous-séquences étant synchronisées ; dans lequel ledit procédé comprend les étapes supplémentaires consistant à :

   - sélectionner les thons qui sont présents simultanément dans ladite première sous-séquence d'images et dans ladite deuxième sous-séquence d'images ;
   - déterminer un calcul pour la valeur de distance pour lesdits thons sélectionnés, en utilisant les valeurs de ladite position relative entre ledit premier capteur optique et ledit deuxième capteur optique ; et
   - modifier ladite valeur de taille pour chacun des thons sélectionnés en utilisant ladite valeur de distance.

3. Procédé selon la revendication 2, **caractérisé en ce que** la sélection de thons qui sont présents simultanément dans ladite première sous-séquence d'images et dans ladite deuxième sous-séquence d'images comprend la sélection de deux points caractéristiques (3) de chaque thon sélectionné dans l'une parmi ladite première sousséquence et ladite deuxième sous-séquence, lesdits deux points caractéristiques (3) étant de préférence la pointe de la tête et la pointe de la queue, et la projection desdits deux points dans l'autre parmi ladite première sousséquence et ladite deuxième sous-séquence, au moyen de lignes épipolaires (4) ; de sorte que ceux des thons avec lesdits deux points caractéristiques (3) dans l'une parmi ladite première sous-séquence et ladite deuxième sous-séquence qui correspondent à deux autres points caractéristiques (3) situés sur lesdites lignes épipolaires (4) dans l'autre parmi ladite première sous-séquence et ladite deuxième sous-séquence soient sélectionnés.

4. Procédé selon l'une quelconque des revendications 1 à 3, **caractérisé en ce que** la sélection de thons à partir de ladite séquence d'images comprend les étapes supplémentaires consistant à :

- ajuster un modèle d'image de thon auxdits deuxièmes objets, de sorte que si l'erreur d'ajustement pour un objet dépasse une valeur de seuil d'erreur, ledit objet soit écarté, alors que dans le cas contraire, ledit objet est considéré comme étant un thon sélectionné et un modèle ajusté est obtenu ;
et dans lequel la détermination d'un calcul pour la valeur de taille pour chacun desdits thons sélectionnés comprend l'obtention de ladite valeur de taille à partir dudit modèle ajusté desdits thons sélectionnés.

5. Procédé selon la revendication 4, **caractérisé en ce que** ledit modèle d'image de thon comprend un modèle en segments, dans lequel des points, appelés vertèbres, $V_i$, situés le long de l'axe du thon sont utilisés ; de préférence 20 points, numérotés de la vertèbre 0 ($v_0$), qui correspond à la pointe de la tête, à la vertèbre 19 ($v_{19}$), qui correspond à l'extrémité de la queue.

6. Procédé selon l'une quelconque des revendications 1 à 5, **caractérisé en ce que** la détermination de ladite valeur du nombre de thons qui ont traversé ladite région d'eau (1) pendant ledit intervalle de mesure en utilisant ledit échogramme comprend les étapes consistant à :

- segmenter des régions dudit échogramme en appliquant des critères de morphologie mathématique, en considérant que ledit échogramme est une image ;
- obtenir des régions segmentées ; et
- déterminer ladite valeur du nombre de thons comme étant la valeur du nombre desdites régions segmentées ;
dans lequel lesdits critères de morphologie mathématique comprennent de préférence des modèles de trace d'échogramme pour le thon, de sorte que lesdites régions soient segmentées par similarité morphologique avec lesdits modèles de trace.

7. Procédé selon l'une quelconque des revendications 1 à 6, **caractérisé en ce qu'**une structure de support (5) reliant une première cage (6) à une deuxième cage (7) est agencée, dans lequel ladite structure de support (5) a une première fenêtre (8) traversante communiquant avec ladite première cage (6) et une deuxième fenêtre (9) traversante communiquant avec ladite deuxième cage (7), définissant une zone de passage pour des thons entre ladite première fenêtre (8) et ladite deuxième fenêtre (9), une direction de passage allant horizontalement de ladite première cage (6) à ladite deuxième cage (7), une première direction (101) qui coïncide avec ladite direction de passage et une deuxième direction (102) qui est horizontale et perpendiculaire à ladite première direction (101) étant ainsi définies ; dans lequel ladite structure a un premier profil lorsqu'elle est vue dans ladite première direction (101), et un deuxième profil lorsqu'elle est vue dans ladite deuxième direction (102) ; et dans lequel ledit intervalle de mesure comprend un temps pendant lequel une pluralité de thons se déplace de ladite première cage (6) à ladite deuxième cage (7) dans ladite direction de passage.

8. Procédé selon la revendication 7, **caractérisé en ce que** ledit capteur acoustique a un faisceau de rideau de détection avec un côté large et un côté étroit, ledit capteur étant agencé de sorte que ledit côté large s'étende dans ladite deuxième direction (102) ayant une deuxième largeur de faisceau telle qu'elle couvre la totalité de ladite région d'eau (1), et que ledit côté étroit s'étende dans ladite première direction (101) ayant une première largeur de faisceau inférieure à 5°, de préférence inférieure à 2°, de manière davantage préférée entre 1° et 0,5°.

9. Procédé selon la revendication 8, **caractérisé en ce que** ledit capteur acoustique comprend un échosondeur et un transducteur à large faisceau, dans lequel ladite deuxième largeur de faisceau a entre 40° et 80°, de préférence entre 45° et 55°, de manière davantage préférée 49°.

10. Procédé selon l'une ou l'autre des revendications 8 ou 9, **caractérisé en ce que** lesdits moyens de mesure (2) sont positionnés sur le fond interne de ladite structure de support (5), centrés par rapport à ladite deuxième direction (102), et aussi de préférence centrés par rapport à ladite première direction (101), et dans lequel ledit capteur acoustique est positionné orienté dans la direction verticale (100), de sorte que ladite région d'eau (1) soit comprise dans ladite zone de passage.

**11.** Procédé selon la revendication 10, **caractérisé en ce que** ledit deuxième profil de ladite structure de support (5) a une forme de losange, avec un sommet supérieur et un sommet inférieur, et dans lequel lesdits moyens de mesure (2) sont positionnés dans ledit sommet inférieur et orientés dans la direction verticale (100).

**12.** Procédé selon la revendication 10, **caractérisé en ce que** ladite structure de support (5) a un deuxième profil en forme de pentagone avec un sommet supérieur et une base inférieure plane, dans lequel lesdits moyens de mesure (2) sont positionnés sur ladite base plane et dans lequel lesdits moyens de capture d'images sont positionnés orientés vers ladite première fenêtre (8) ou ladite deuxième fenêtre (9).

**13.** Procédé selon la revendication 10, **caractérisé en ce que** ledit deuxième profil de ladite structure de support (5) a une forme rectangulaire, avec une partie inférieure plane et une partie supérieure plane, et dans lequel tous lesdits moyens de mesure (2) sont positionnés dans ladite partie inférieure et orientés dans la direction verticale (100).

**14.** Système pour déterminer la biomasse de thons dans une région d'eau (1), ayant des moyens de mesure (2) comprenant un capteur acoustique et des moyens de capture d'images, configurés pour être agencés en immersion sous ladite région d'eau (1), dans des positions connues et orientés dans une direction ascendante, dans lequel pendant un intervalle de mesure dans lequel des thons traversent ladite région d'eau (1) :

- ledit capteur acoustique est configuré pour prendre des mesures acoustiques en émettant des signaux acoustiques et en recevant des échos, générant ainsi un échogramme ; et
- lesdits moyens de capture d'images sont configurés pour capturer des images, générant une séquence d'images contenant des images desdits thons ;
ledit système comprenant en outre des moyens d'analyse configurés pour :

- déterminer une valeur du nombre de thons qui ont traversé ladite région d'eau (1) pendant ledit intervalle de mesure en utilisant ledit échogramme ;
- déterminer une valeur de poids de thon en utilisant ladite séquence d'images ;
- déterminer une valeur de biomasse de thons qui ont traversé ladite région d'eau (1) pendant ledit intervalle de mesure à partir de ladite valeur du nombre de thons et à partir de ladite valeur de poids de thon ;
dans lequel la détermination de ladite valeur de poids de thon comprend :

- la sélection de thons à partir de ladite séquence d'images ;
- la détermination d'un calcul pour la valeur de taille pour chacun desdits thons sélectionnés ;
- la détermination d'un calcul pour la valeur de poids individuelle pour chacun desdits thons sélectionnés partir de ladite valeur de taille ; et
- la détermination de ladite valeur de poids de thon comme la valeur moyenne de ladite valeur de poids individuelle pour chacun desdits thons sélectionnés ;

dans lequel ladite valeur de biomasse est déterminée comme la multiplication de ladite valeur du nombre de thons par ladite valeur de poids de thon ;
dans lequel ladite séquence d'images comprend une pluralité de trames et dans lequel la sélection de thons à partir de ladite séquence d'images comprend les étapes suivantes :

- la segmentation desdites trames pour obtenir des premiers objets candidats ;
- le filtrage desdits premiers objets candidats par leurs caractéristiques géométriques, pour obtenir des deuxièmes objets qui sont un sous-ensemble desdits premiers objets, dans lequel lesdits deuxièmes objets sont sélectionnés comme étant des thons.

FIG. 1

FIG. 2

FIG. 3

FIG. 4

FIG. 5a

FIG. 5b

FIG. 5c

FIG. 6

FIG. 7

FIG. 8

FIG. 9

FIG. 10

FIG. 11

FIG. 12

FIG. 13

FIG. 14

FIG. 15

FIG. 16

$\theta = 15°$     $\theta = 30°$     $\theta = 45°$

FIG. 17

FIG. 18

FIG. 19

**REFERENCES CITED IN THE DESCRIPTION**

**Patent documents cited in the description**

- US 2011292201 A1

- US 20111201 A1, WESTPHAL WAYLON

**Non-patent literature cited in the description**

- **V. PUIG et al.** Biomass estimation of bluefin tuna in sea cages by the combined use of acoustic and optical techniques. *Vol. Sci. Pap. ICCAT,* 01 January 2012

- **PUIG PONS et al.** Monitorización y medida de atunes en jaulas mediante el uso combinado de tecnicas acústicas y ópticas. *Tesina Master en Ingenieria Acústica,* 01 January 2010